# EUROPÄISCHE PATENTSCHRIFT

(11) **EP 2 337 649 B1**
(45) Veröffentlichungstag und Bekanntmachung des Hinweises auf die Patenterteilung: **19.12.2012**
(21) Anmeldenummer: 09740064.2
(22) Anmeldetag: 16.10.2009
(51) Int. Cl.: B23G 7/02

(54) **Gewindeformer mit Formleisten**
Thread former having molding
Outil à former les filets avec languettes de formage

(30) Priorität: 22.10.2008 DE 102008053772
(43) Veröffentlichungstag der Anmeldung: 29.06.2011
(73) Patentinhaber: Komet Group GmbH, 70565 Stuttgart (DE)
(72) Erfinder: EDELMANN, Karl-Heinz, 71139 Ehningen (DE)
(74) Vertreter: Jackisch-Kohl, Anna-Katharina
(86) Internationale Anmeldenummer: PCT/EP2009/007421
(87) Internationale Veröffentlichungsnummer: WO 2010/046060

(56) Entgegenhaltungen:
- EP-A1- 0 933 157
- DE-A1- 3 934 621
- DE-A1- 10 136 293
- DE-A1- 10 338 754
- DE-A1-102005 019 921
- DE-A1-102005 062 519
- DE-A1-102006 015 367
- US-A- 2 275 097

## Beschreibung

Die Erfindung betrifft einen Gewindeformer nach dem Oberbegriff des Anspruches 1. Ein Gewinde former gemäß dem Oberbegriff des Anspruchs 1 ist beispielweise aus DE 3934621C oder EPO 933 157 bekannt.

Gewindeformer dienen zur spanlosen Formgebung von Gewinden. Das freie Ende des Grundkörpers bildet einen Arbeitsteil, der über den Umfang verteilt angeordnete Formleisten aufweist. Der Arbeitsteil hat polygonalen Querschnitt. Im Bereich der Querschnittsecken befinden sich die Formleisten in Form zylindrischer Leisten, die aus hartem und verschleißfestem Werkstoff bestehen. Die Formleisten sind in Nuten des Grundkörpers eingelötet. Insbesondere das gemeinsame Profilschleifen zur Herstellung der Gewindeformzähne im Grundkörper und in den eingesetzten Formleisten führt zu Schwierigkeiten, weil die hierfür eingesetzten Schleifscheiben rasch zusetzen.

Bei einem bekannten Gewindeformer (DE 103 38 754) wird ein hülsenförmiges Formgebungselement nach Art einer Haube oder einer Buchse auf den Grundkörper aufgesetzt. Das Formgebungselement umgibt den Grundkörper und ist an seinem Umfang mit einem Formgebungsgewinde versehen.

Bei einem anderen bekannten Gewindeformer (DE 10 2005 062 519 A1) ist auf das freie Ende eines Einspannschaftes ein Arbeitsteil aufgesteckt und kraftschlüssig mit dem Einspannschaft verbunden, beispielsweise durch Kleben, Löten oder Aufschrumpfen. Das Arbeitsteil ist als Hülse oder als Massivteil ausgebildet und weist Gewinderillen auf, die in die Mantelfläche des Arbeitsteils mit einer Schleifscheibe eingebracht werden.

Der Erfindung liegt die Aufgabe zugrunde, den gattungsgemäßen Gewindeformer so auszubilden, dass er einfach und kostengünstig gefertigt werden kann.

Diese Aufgabe wird beim gattungsgemäßen Gewindeformer erfindungsgemäß mit den kennzeichnenden Merkmalen des Anspruches 1 gelöst.

Beim erfindungsgemäßen Gewindeformer stehen die Formleisten, die bei der Gewindeformung ausschließlich mit dem jeweiligen Werkstück in Berührung kommen, radial so weit über den Grundkörper vor, dass das Profilierwerkzeug, vorzugsweise die Schleifscheibe, bei der Herstellung bzw. beim Nachschleifen der Gewindeformzähne lediglich mit den Formleisten, nicht aber mit dem Grundkörper in Eingriff kommt. Das Profilierwerkzeug muss nur noch eine Werkstoffsorte zerspanen, wodurch der Herstellprozess einfacher und schneller wird. Das Profilierwerkzeug kann somit im Hinblick auf seine Profilieraufgabe optimal ausgewählt werden.

Die Formleisten sind vorteilhaft in Aufnahmenuten des Grundkörpers befestigt. In den Aufnahmenuten lassen sich die Formleisten zuverlässig befestigen, beispielsweise durch Löten oder Kleben. Die Formleisten können vorteilhaft symmetrisch zu ihrer Längsmittelebene ausgebildet sein. Es ist aber auch möglich, dass die Formleisten asymmetrisch in Bezug auf ihre Längsmittelebene ausgebildet sind.

Die Formleisten können achsparallel angeordnet sein, d.h. die Längsachse des Gewindeformers liegt in der Längsmittelebene der Formleisten. Der Boden der Aufnahmenuten verläuft in diesen Fällen parallel zu Axialebenen des Gewindeformers.

Je nach Einsatzfall des Gewindeformers ist es auch möglich, dass die Formleisten unter einem Winkel zu einer zugehörigen Axialebene liegen. In diesem Falle verläuft der Boden der Aufnahmenuten vom freien Ende des Gewindeformers schräg in Richtung auf die Außenseite des Gewindeformers.

Die Formleisten können, in Seitenansicht gesehen, einen Winkel mit der Längsachse des Gewindeformers einschließen, wobei die Formleisten sowohl gerade als auch spiralig sich erstrecken können.

Bei einer Ausführungsform sind die Formleisten über den Umfang des Grundkörpers vorteilhaft gleichmäßig verteilt angeordnet.

Bei besonders langen Gewindeformern oder bei Gewindeformern, die mit sehr hohen Schnittgeschwindigkeiten arbeiten, ist es vorteilhaft, wenn die Formleisten über den Umfang des Grundkörpers ungleichmäßig verteilt angeordnet sind. Eine solche ungleichmäßige Verteilung führt zu einem ruhigeren Lauf des Gewindeformers.

Die Formleisten können derart symmetrisch zur Axialebene des Grundkörpers angeordnet sein, dass ihre Längsebene in der zugehörigen Axialebene der Formleisten liegt.

Es ist aber auch möglich, dass die Formleisten so angeordnet sind, dass ihre Längsmittelebene einen spitzen Winkel mit der zugehörigen, durch die Formleisten sich erstreckenden Axialebene des Grundkörpers einschließt.

Der Bereich zwischen benachbarten Formleisten kann zur Zuführung von Kühlschmierstoff an die Bearbeitungsstelle verwendet werden. Es ist aber vorteilhaft auch möglich, den Gewindeformer mit einer inneren Kühlmittelzuführung zu versehen. Dadurch kann das Kühlmittel gezielt an der Bearbeitungsstelle des Gewindeformers ausgebracht werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in perspektivischer Darstellung eine erste Ausführungsform eines erfindungsgemäßen Gewindeformers,
- Fig. 2: den Gewindeformer gemäß Fig. 1 in Seitenansicht,
- Fig. 3: in vergrößerter Darstellung eine Stirnansicht des Gewindeformers gemäß Fig. 1,
- Fig. 4 bis Fig. 6: jeweils in Stirnansicht weitere Ausführungsformen von erfindungsgemäßen Gewindeformern,
- Fig. 7: in perspektivischer Darstellung eine weitere Ausführungsform eines erfindungsgemäßen Gewindeformers, dessen Formleisten nur schematisch dargestellt sind,
- Fig. 8: in Seitenansicht den Gewindeformer gemäß Fig. 7,
- Fig. 9: in vergrößerter Darstellung eine Stirnansicht des Gewindeformers gemäß Fig. 7,
- Fig. 10 bis Fig. 12: in Darstellungen entsprechend den Fig. 7 bis 9 eine weitere Ausführungsform eines erfindungsgemäßen Gewindeformers,
- Fig. 13 und Fig. 14: jeweils in Seitenansicht erfindungsgemäße Gewindeformer mit Innenkühlung,
- Fig. 15: in Stirnansicht eine weitere Ausführungsform eines erfindungsgemäßen Gewindeformers.

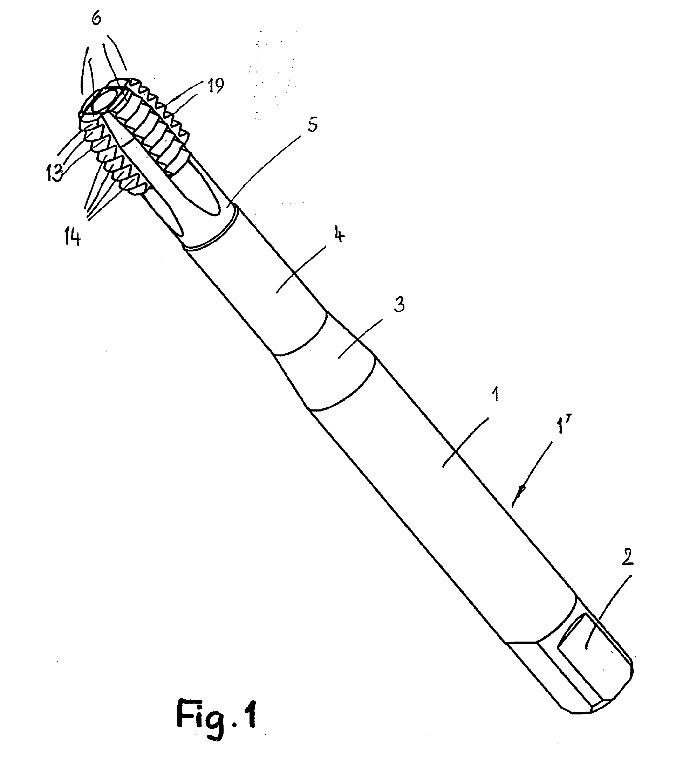

Die im Folgenden beschriebenen Gewindeformer dienen zur spanlosen Formgebung von Gewinden. Insbesondere werden mit den Gewindeformern Innengewinde hergestellt. Der Gewindeformer gemäß den Fig. 1 bis 3 hat einen Grundkörper 1' mit einem vorzugsweise zylindrischen Spannschaft 1, mit dem er in einer Werkzeugaufnahme aufgenommen wird. Der Spannschaft 1 ist an einem Ende mit einer Profilierung 2 versehen, mit der ein Formschluss des Gewindeformers in der Werkzeugaufnahme in Drehrichtung erreicht wird.

Der Spannschaft 1 geht über einen kurzen kegelförmigen Zwischenabschnitt 3 in einen vorzugsweise zylindrischen Endabschnitt 4 über. Er hat kleinere Querschnittsfläche als der Spannschaft 1 im Bereich zwischen der Profilierung 2 und dem Zwischenabschnitt 3. An den Endabschnitt 4 schließt ein Kopfteil 5 an, an dem in noch zu beschreibender Weise Formleisten 6 befestigt sind. Abweichend vom dargestellten Ausführungsbeispiel kann der Grundkörper 1' über seine Länge jede andere geeignete Querschnittsausbildung haben.

Der Spannschaft 1 mit der Profilierung 2, dem Zwischenabschnitt 3, dem Endabschnitt 4 und dem Kopfteil 5 ist einstückig ausgebildet und besteht aus einem zähen Material, wie beispielsweise aus einem Schnellarbeitsstahl. Der Kopfteil 5 hat ein konisch verjüngtes Ende.

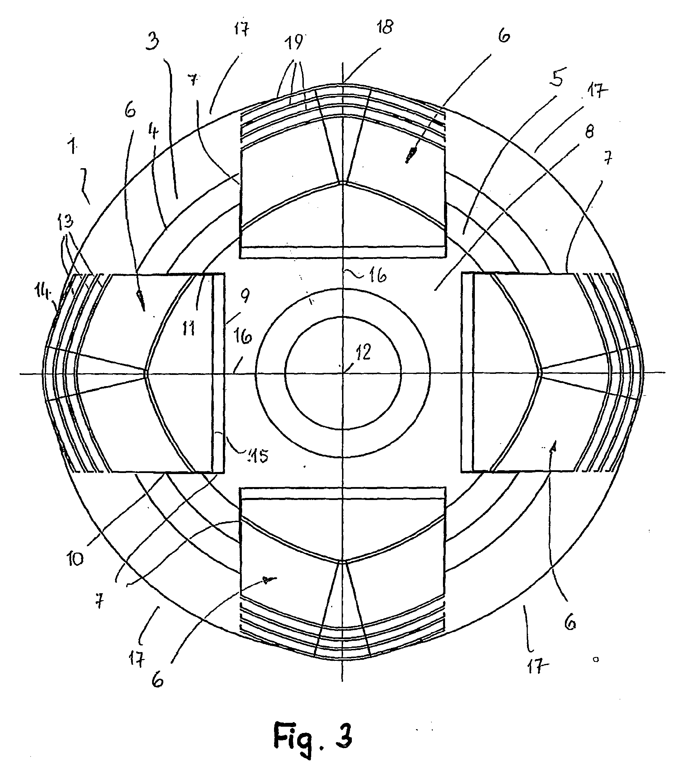

Der Kopfteil 5 ist zur Aufnahme der Formleisten 6 mit Aufnahmenuten 7 versehen, die sich axial von der Stirnseite 8 des Kopfteiles 5 aus erstrecken. Die Aufnahmenuten 7 erstrecken sich beispielsweise etwa über die halbe axiale Länge des Kopfteiles 5. Je nach Gestaltung des Gewindeformers können die Aufnahmenuten 7 und somit auch die darin untergebrachten Formleisten 6 auch andere Längen haben. Die Aufnahmenuten 7 laufen mit geringem Abstand vom Endabschnitt 4 in die Außenseite des Kopfteiles 5 aus. Die Aufnahmenuten 7 lassen sich sehr einfach und kostengünstig im Kopfteil 5 mit Hilfe einer Schleifscheibe einbringen. Wie sich aus Fig. 3 ergibt, haben die Aufnahmenuten 7 einen ebenen Boden 9, der zwei parallel zueinander liegende ebene Seitenflächen 10, 11 miteinander verbindet. Die Böden 9 der Aufnahmenuten 7 liegen tangential zu einem gedachten Kreis um die Längsachse 12 des Gewindeformers. Die Formleisten 6 sind in den Aufnahmenuten 7 beispielsweise durch Löten, Kleben oder Schweißen befestigt. Ein zusätzlicher Formschluss der Formleisten 6 in den Aufnahmenuten 7 ist vorteilhaft, aber nicht zwingend erforderlich.

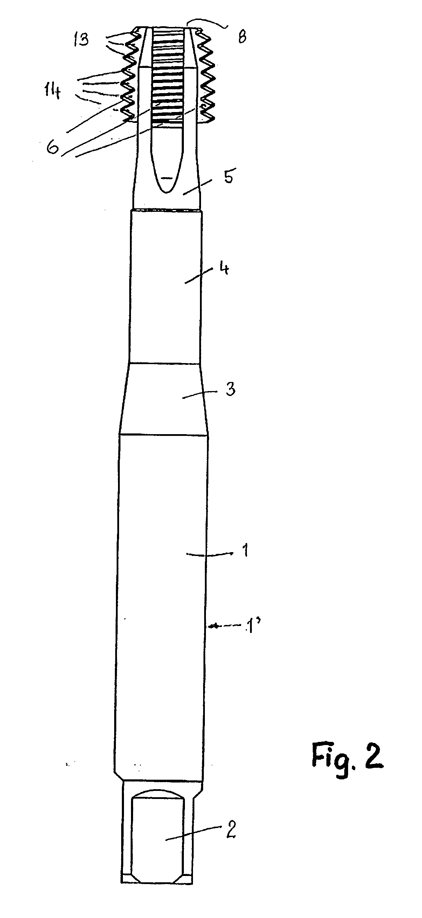

Wie sich aus Fig. 2 ergibt, stehen die Formleisten 6 über den Kopfteil 5 radial über. Dieser radiale Überstand der Formleisten 6 ist so groß, dass bei der Gewindeformung ausschließlich die Formleisten 6 mit dem jeweiligen Werkstück in Berührung kommen, nicht jedoch der Grundkörper 1'. Die Formleisten 6 können aus Hartmetall, Cermet, CBN, Diamant oder anderen hochharten Schneidstoffen bestehen.

Die Formleisten 6 haben an ihrer Außenseite mit Abstand hintereinander liegende Gewindeformzähne 13, 14 (Fig. 2), die sich über die Breite der Formleisten 6 erstrecken. Die Gewindeformzähne 13, 14 haben über ihre Länge konstante Steigung, um in der Bohrungswand das gewünschte Gewinde zu erzeugen. Die der ebenen Stirnseite 8 benachbart liegenden Gewindeformzähne 13 haben kleineren Außendurchmesser als die nachfolgenden Gewindeformzähne und dienen der schrittweisen Ausformung des Gewindes bei der Gewindefertigung. Dadurch wird erreicht, dass die Gewindetiefe nicht in einem Zuge erzeugt werden muss, sondern dass zunächst das Gewinde nur über einen Teil seiner Profiltiefe in der Bohrungswand angebracht wird und erst die nachfolgenden Gewindeformzähne 13 das Gewinde auf volle Profiltiefe fertigen. Es können je nach Ausbildung des Gewindeformers auch nur ein oder mehrere Gewindeformzähne 13 im Anschnittbereich des Gewindeformers vorgesehen sein. Im Ausführungsbeispiel sind im Anschnittbereich jeder Formleiste 6 drei Gewindeformzähne 13 vorhanden. Die nachfolgenden Gewindeformzähne 14 dienen zur Führung des Gewindeformers bei der Gewindeerzeugung.

Die Formleisten 6 haben vorteilhaft rechteckigen Querschnitt. Die im Querschnitt längere Seite 15 (Fig. 3) der Formleiste 6 ist dem Boden 9 der Aufnahmenut 7 zugewandt, vorzugsweise auf ihm befestigt. Die Formleisten 6 können selbstverständlich auch andere Querschnitte haben, zum Beispiel runden oder vieleckigen Querschnitt. Wie Fig. 3 zeigt, sind die Gewindeformzähne 13, 14 in Umfangsrichtung des Gewindeformers derart gekrümmt, dass sie, in Draufsicht gemäß Fig. 3 gesehen, in halber Länge den größten Abstand von der Längsachse 12 des Gewindeformers haben. Die Gewindeformzähne 13, 14 erstrecken sich über eine verhältnismäßig große Länge in Umfangsrichtung des Kopfteiles 5. Beispielhaft erstrecken sich die Gewindeformzähne 13, 14 über einen Winkelbereich zwischen etwa 30° und 60°, vorzugsweise etwa über 45°. Im Ausführungsbeispiel gemäß den Fig. 1 bis 3 sind die Formleisten 6 symmetrisch zur jeweiligen Axialebene 16 des Gewindeformers ausgebildet und angeordnet.

Die Formleisten 6 haben über den Umfang des Kopfteiles 5 einen Winkelabstand von 90° zueinander. Zwischen benachbarten Formleisten 6 werden Zwischenräume 17 gebildet, über die während der Gewindeherstellung Kühlschmierstoff an die Bearbeitungsstelle zugeführt werden kann.

Da die Gewindeformzähne 13, 14 ausschließlich an den Formleisten 6 vorgesehen sind, muss bei der Herstellung der Gewindeformzähne 13, 14 bzw. bei deren Nachschleifen die Schleifscheibe nur noch eine Werkstoffsorte zerspanen, wodurch der Herstellprozess einfacher und schneller wird.

Der Boden 9 der Aufnahmenuten 7 kann sich parallel zu einer Axialebene 16 des Gewindeformers erstrecken. Die Formleisten 6 sind so ausgebildet, dass ihre Querschnittsdicke von der Stirnseite 8 des Gewindeformers aus in Achsrichtung stetig zunimmt. Die Formleisten 6 sind dann achsparallel am Kopfteil 5 angeordnet. Die Formleisten 6 können aber auch konisch in Bezug auf die Längsachse 12 des Kopfteiles 5 befestigt sein. In diesem Falle erstrecken sich die Formleisten 6 von der Stirnseite 8 des Kopfteiles 5 ausgehend schräg nach außen.

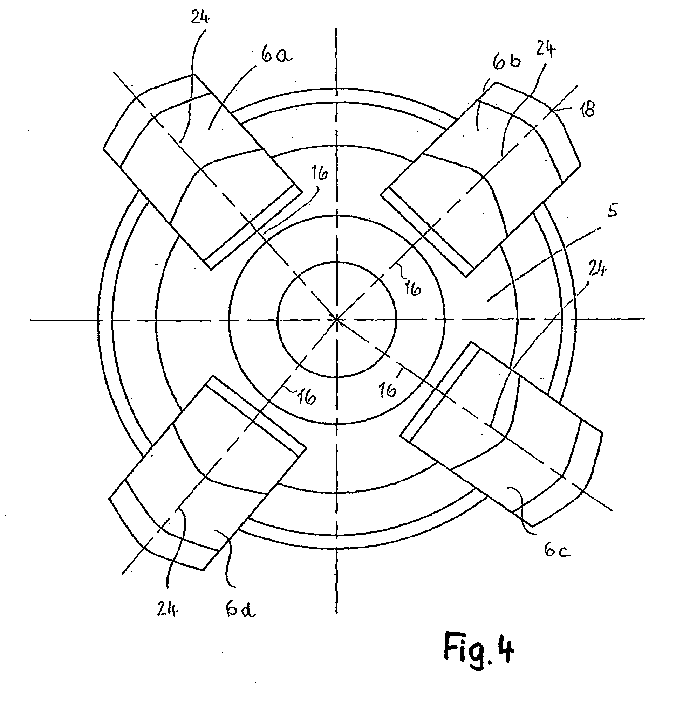

Anhand der Fig. 4 bis 6 wird beispielhaft erläutert, dass die Formleisten 6 auch unregelmäßig über den Umfang des Kopfteiles 5 angeordnet sowie auch winklig in Bezug auf die zugehörigen Axialebenen angeordnet sein können.

Fig. 4 zeigt den Fall, dass einander gegenüberliegende Formleisten 6a, 6c und 6b, 6d unter einem geringen Winkel versetzt zueinander liegen. Sämtliche Formleisten 6a bis 6d sind symmetrisch zu ihrer zugehörigen Axialebene 16 bzw. ihrer Längsmittelebene 24 ausgebildet. Die Axialebenen 16 der einander gegenüberliegenden Formleisten 6a, 6c und 6b, 6d schließen jeweils einen von 180° geringfügig abweichenden Winkel miteinander ein. Die Anordnung der Formteile 6a bis 6d längs des Umfanges des Kopfteiles 5 ist so gewählt, dass die Formteile 6a und 6b sowie 6d und 6c einen kleineren Abstand voneinander haben als die Formteile 6a und 6d bzw. 6d und 6d. Durch diese ungleichmäßige Verteilung der Formteile über den Umfang des Kopfteiles 5 wird ein ruhiger Lauf des Gewindeformers bei der Gewindeerzeugung erreicht. Insbesondere wirkt sich diese ungleichmäßige Verteilung der Formteile 6a bis 6d bei besonders langen Gewindeformen vorteilhaft aus. Auch bei Gewindeformern, die mit sehr hohen Schnittgeschwindigkeiten arbeiten, beruhigen die ungleichmäßig über den Umfang des Kopfteiles 5 angebrachten Formteile 6a bis 6d den Lauf des Gewindeformers.

Der Gewindeformer nach Fig. 4 kann auch so ausgebildet sein, dass beispielsweise die Formleisten 6a, 6c diagonal einander gegenüberliegen, während die Formleisten 6b, 6d in Umfangsrichtung versetzt zueinander liegen. Auch dadurch kann eine ungleichmäßige Verteilung der Formleisten erreicht werden.

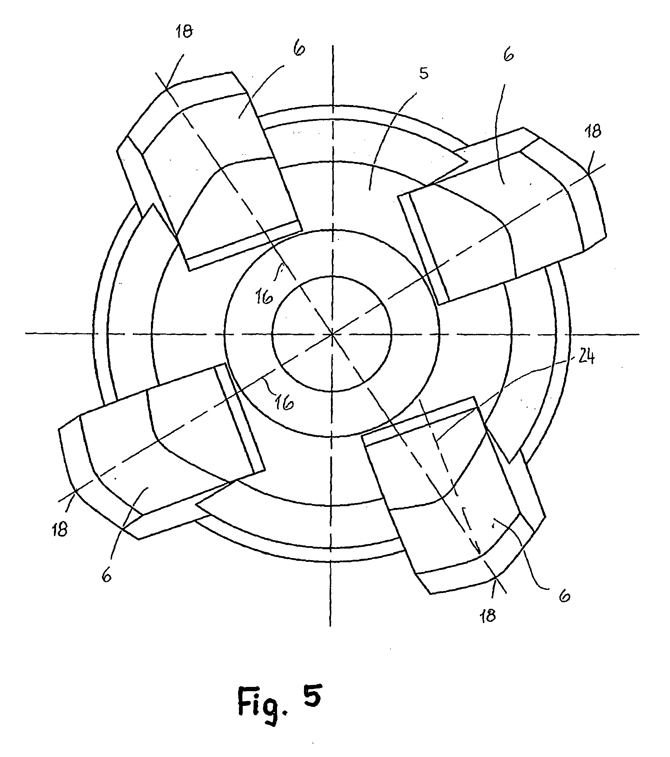

Fig. 5 zeigt die Möglichkeit, die Formleisten 6 gleichmäßig über den Umfang des Kopfteiles 5 verteilt anzuordnen. Im Unterschied zu den vorigen Ausführungsformen sind die Formleisten 6 jedoch so am Gewindeformer befestigt, dass die Längsachsen 24 der Formteile 6 winklig zu den Axialebenen 16 liegen, die sich an der radial äußeren Seite der Formleisten durch deren Mitte 18 erstrecken. Darüber hinaus sind die Formleisten 6 nicht achsparallel am Kopfteil 5 angeordnet, sondern erstrecken sich in Längsrichtung des Kopfteiles 5 mit einer Steigung. Einander gegenüberliegende Formleisten sind so angeordnet, dass die erwähnte Mitte 18 im radial äußeren Bereich der Formleisten jeweils auf einer gemeinsamen Axialebene 16 liegt. Die auf diese Weise gebildeten beiden Axialebenen 16 der Formleisten 6 liegen rechtwinklig zueinander. Die Formleisten 6 sind gleich ausgebildet und in gleicher Richtung schräg liegend am Kopfteil 5 angeordnet. Die Formleisten 6 sind im Übrigen gleich ausgebildet wie bei den vorigen Ausführungsformen.

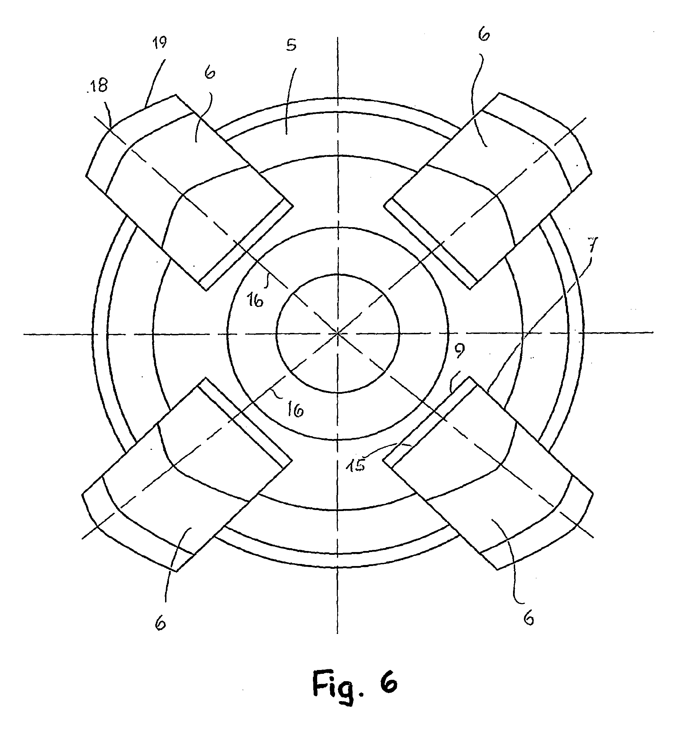

Fig. 6 zeigt beispielhaft, dass die Formleisten 6 abweichend von den vorigen Ausführungsbeispielen auch asymmetrischen Querschnitt haben können. Die Formleisten 6 selbst sind diametral einander gegenüberliegend am Kopfteil 5 in der beschriebenen Weise befestigt. Außerdem sind die Formleisten 6 über den Umfang des Kopfteiles 5 gleichmäßig verteilt angeordnet. Aufgrund der asymmetrischen Querschnittsausbildung liegt der am weitesten radial außen liegende Teil 18 jeder Formleiste 6 nicht mehr in halber Breite der Formleiste. Die Axialebenen 16 des Gewindeformers, die sich durch diesen äußeren Punkt 18 der Formleisten erstrecken, liegen unter einem von 90° abweichenden Winkel zum Boden 9 der Aufnahmenut 7 bzw. zur Querschnittsseite 15 des Formteiles 6. Die Formleisten 6 selbst liegen achsparallel und können wie bei der Ausführungsform nach den Fig. 1 bis 3 mit ihrer Querschnittsseite 15 parallel zur jeweiligen Axialebene 16 liegen, mit ihr aber auch einen spitzen Winkel einschließen.

Bei den beschriebenen Ausführungsbeispielen haben die Gewindeformzähne 13, 14 jeweils Drückkanten 19, die bei den Ausführungsformen gemäß den Fig. 1 bis 5 mittig zur Formleiste geschliffen sind. Dadurch liegt der am weitesten radial außen liegende Teil 18 jeder Formleiste 6; 6a bis 6d in halber Länge dieser Drückkanten 19. Beim Ausführungsbeispiel nach Fig. 6 sind die Drückkanten 19 außermittig zur Formleiste 6 geschliffen, so dass der radial am weitesten vorstehende Teil 18 der Drückkanten 19 nicht mehr in halber Länge der Drückkanten liegt.

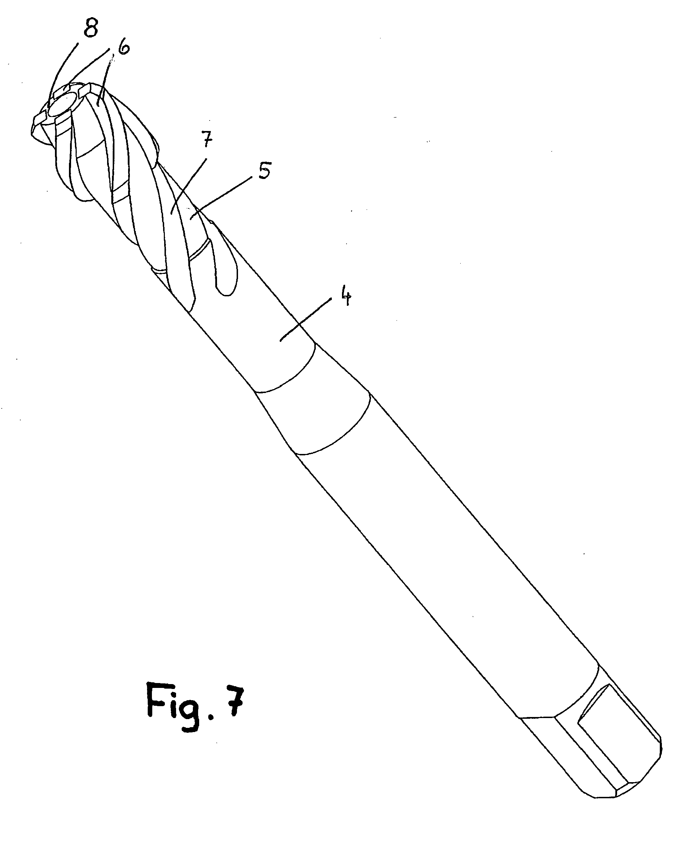

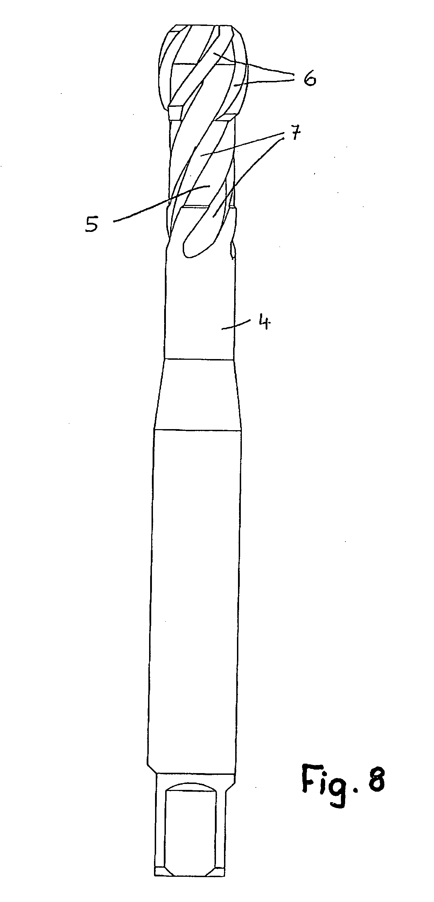

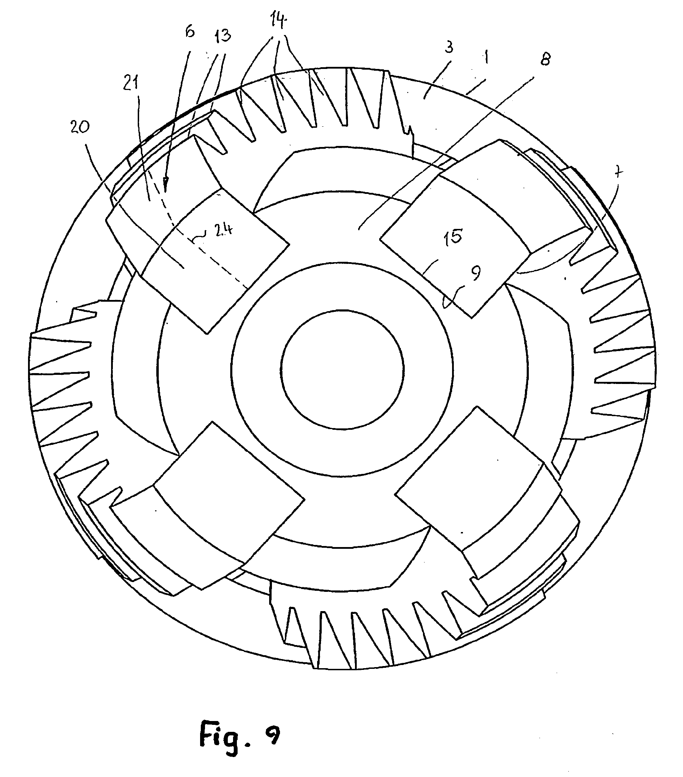

Die Fig. 7 bis 9 zeigen einen Gewindeformer, bei dem die Formleisten 6 mit jeweils gleicher Steigung längs des Umfanges des Kopfteiles 5 des Gewindeformers angeordnet sind. Die Aufnahmenuten 7 erstrecken sich von der ebenen Stirnseite 8 des Gewindeformers bis in den Endabschnitt 4. Die Formleisten 6 sind jeweils gleich ausgebildet und bezogen auf ihre Längsmittelebene 24 symmetrisch im Querschnitt ausgebildet. Die Formleisten 6 haben die Gewindeformzähne 13, 14, mit denen das Gewinde im Werkstück gefertigt und der Gewindeformer geführt wird. Jede Formleiste 6 hat eine ebene Stirnfläche 20, die in der ebenen Stirnseite 8 des Kopfteiles 5 liegt. An die Stirnfläche 20 schließt stumpfwinklig eine Schrägfläche 21 an. Die Formleisten 6 können achsparallel angeordnet sein. Im Ausführungsbeispiel haben die Formleisten 6 wiederum rechteckigen Querschnitt. Mit ihrer Querschnittsseite 15 liegen die Formleisten 6 am Boden 9 der Aufnahmenuten 7 an. Die Aufnahmenuten 7 können so ausgebildet sein, dass ihr Boden 9 parallel zu einer Axialebene des Kopfteiles 5 verläuft. Es ist aber auch möglich, dass der Boden 9 unter einem spitzen Winkel zur entsprechenden Axialebene des Kopfteiles 5 verläuft.

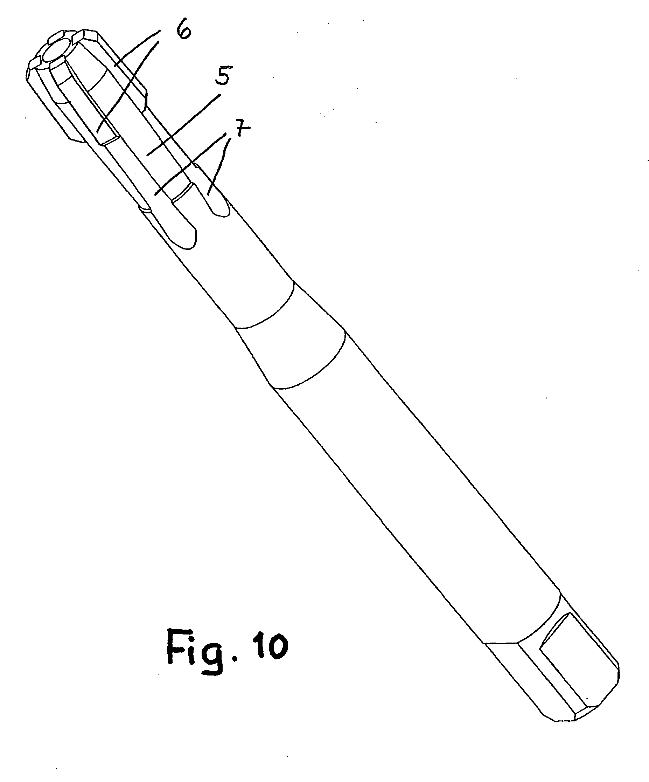

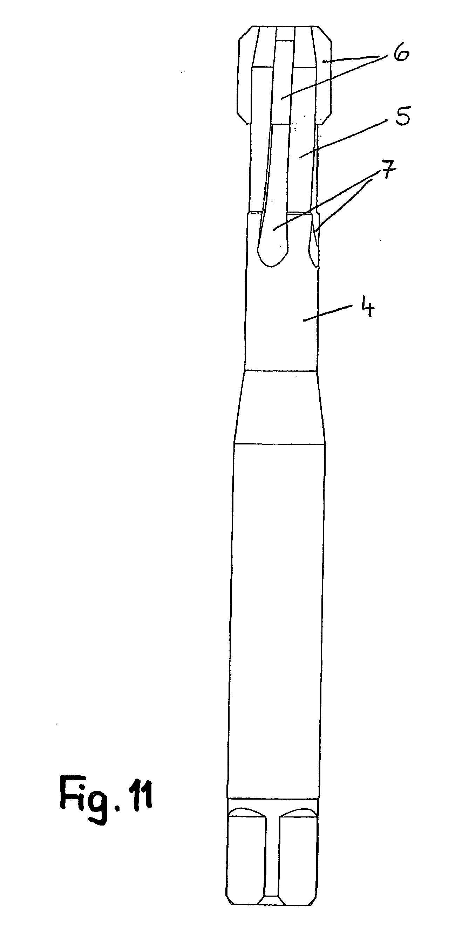

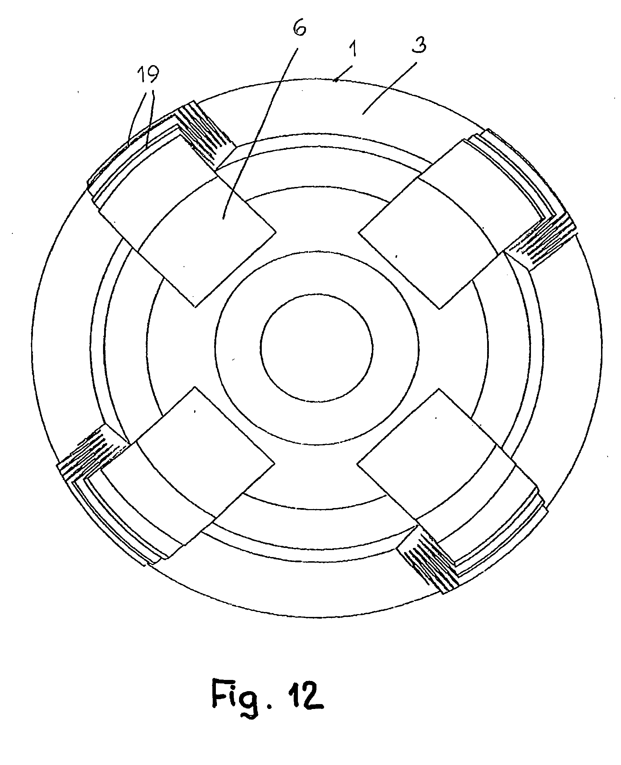

Die Fig. 10 bis 12 zeigen einen Gewindeformer, bei dem die Aufnahmenuten 7 für die Formleisten 6 wiederum bis in den Endabschnitt 4 reichen. Die Formleisten 6 selbst erstrecken sich entsprechend der vorigen Ausführungsform nur über einen Teil der Länge des Kopfteiles 5. Im Unterschied zur vorigen Ausführungsform haben die Aufnahmenuten 7 nur eine geringe Steigung, so dass dementsprechend auch die Formleisten 6 nur eine geringe Steigung haben. Die Drückkanten 19 der Formleisten 6 sind wie bei der vorigen Ausführungsform mittig zur Formleiste 6 geschliffen. Wie sich aus Fig. 12 ergibt, liegen die Formleisten 6 in einem Winkelabstand von 90° zueinander. Im Übrigen ist der Gewindeformer gleich ausgebildet wie die Ausführungsformen gemäß den Fig. 1 bis 4.

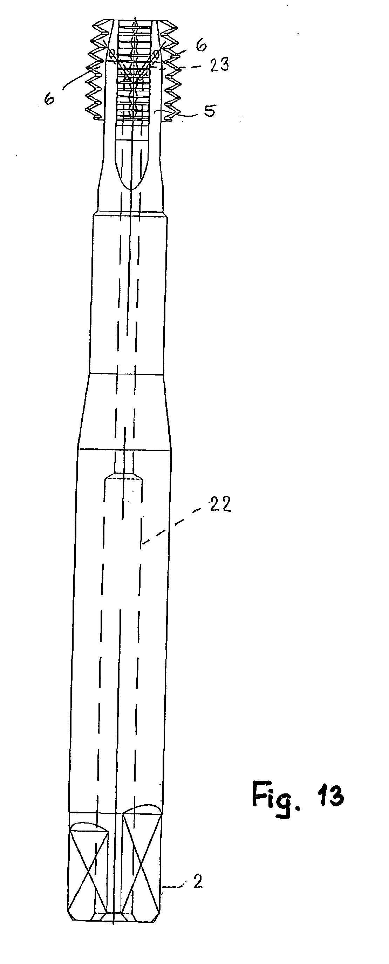

Die Gewindeformer können auch mit einer inneren Kühlmittelzuführung versehen sein, um das Kühlmedium in den Arbeitsbereich zu bringen. Fig. 13 zeigt beispielhaft eine zentrale axiale Kühlbohrung 22, die sich vom Einspannende 2 aus bis in den Kopfteil 5 erstreckt. Von der Kühlmittelbohrung 22 gehen schräg nach außen gerichtete Kühlmittelbohrungen 23 ab, die in den Bereich zwischen benachbarten Formleisten 6 im Kopfteil 5 münden. Das Kühlmedium wird somit während der Gewindefertigung über diese Kühlmittelbohrungen 22, 23 direkt in den Arbeitsbereich des Gewindeformers gebracht, so dass eine optimale Kühlung gewährleistet ist.

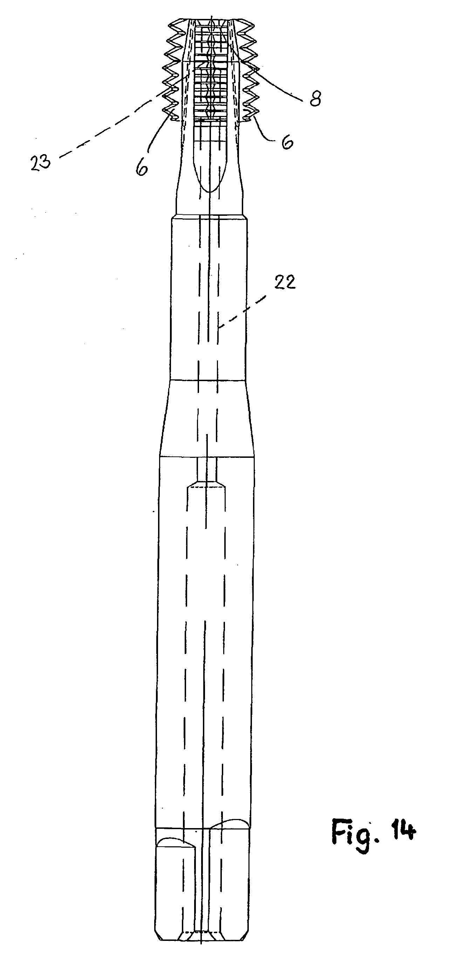

Bei der beispielhaft dargestellten Ausführungsform nach Fig. 14 ist nur die zentrale Kühlmittelbohrung 22 vorgesehen, die in die Stirnseite 8 des Gewindeformers mündet.

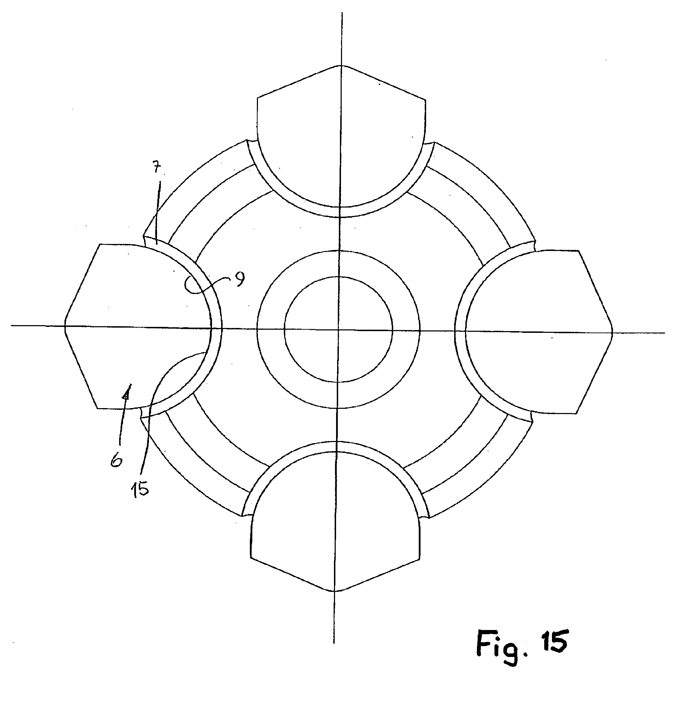

Fig. 15 zeigt beispielhaft die Möglichkeit, die Formleisten auch mit einer anderen Querschnittsform auszubilden. Bei den vorigen Ausführungsbeispielen haben die Formleisten 6 eckigen Querschnitt. In diesem Ausführungsbeispiel ist die dem Boden 9 der Aufnahmenuten 7 zugewandte Außenseite 15 der Formleiste 6 im Querschnitt teilkreisförmig ausgebildet. Auch der Boden 9 der Aufnahmenuten 7 hat eine entsprechende Querschnittsform. Die Formleisten 6 liegen mit ihren gekrümmten Außenseiten 15 flächig am - gekrümmten Boden 9 der Aufnahmenuten 7 an. An dem radial über den Kopfteil 5 vorstehenden Bereich der Formleisten 6 sind die Gewindeformzähne 13, 14 mit den Drückkanten 19 vorgesehen.

Wenn die Formleisten 6 und der Kopfteil 5 des Gewindeformers in bevorzugter Weise über eine Löt- oder Klebeverbindung lösbar miteinander verbunden sind, ist ein einfaches Neubestücken des Gewindeformers unter Wiederverwendung des Grundkörpers 1' gewährleistet. Es müssen nur die Formleisten 6 ausgetauscht werden. Der Gewindeformer mit den Formleisten 6 kann mit Verschleißschutzschichten oder reibungsmindernden Schichten versehen sein. Dadurch wird eine lange Standzeit des Gewindeformers erreicht.

Bei den beschriebenen und dargestellten Ausführungsformen hat der Gewindeformer vier Formleisten. Je nach Anwendungsfall und/oder Baugröße kann der Gewindeformer auch weniger oder mehr als vier Formteile aufweisen.

## Patentansprüche

1. Gewindeformer mit einem Grundkörper (1'), an dem über den Umfang verteilt Formleisten (6, 6a bis 6d) vorgesehen sind, die Gewindeformzähne (13, 14) aufweisen und die durch Löten, Kleben oder Schweißen an Grundkörper (1') befestigt sind,
**dadurch gekennzeichnet, dass** die Formleisten (6, 6a bis 6d) radial so weit über den Grundkörper (1') vorstehen, dass ein Profilierwerkzeug bei der Herstellung bzw. bei dem Nachschleifen der Gewindeformzähne (13, 14) nur mit den Formleisten (6, 6a bis 6d), nicht aber mit dem Grundkörper (1'), in Eingriff kommt und dass bei der Gewindeformung ausschließlich die Formleisten (6, 6a bis 6d) mit dem jeweiligen Werkstück in Berührung kommen, nicht jedoch der Grundkörper (1').

2. Gewindeformer nach Anspruch 1,
**dadurch gekennzeichnet, dass** die Formleisten (6, 6a bis 6d) in Aufnahmenuten (7) des Grundkörpers (1') befestigt sind.

3. Gewindeformer nach Anspruch 1 oder 2,
**dadurch gekennzeichnet, dass** die Formleisten (6, 6a bis 6d) symmetrisch zu ihrer Längsmittelebene (24) ausgebildet sind.

4. Gewindeformer nach Anspruch 1 oder 2,
**dadurch gekennzeichnet, dass** die Formleisten (6, 6a bis 6d) asymmetrisch in Bezug auf ihre Längsmittelebene (24) ausgebildet sind.

5. Gewindeformer nach einem der Ansprüche 1 bis 4,
**dadurch gekennzeichnet, dass** die Formleisten (6, 6a bis 6d) achsparallel angeordnet sind.

6. Gewindeformer nach einem der Ansprüche 1 bis 4,
**dadurch gekennzeichnet, dass** die Formleisten (6, 6a bis 6d) unter einem Winkel zu einer Axialebene (16) liegen.

7. Gewindeformer nach einem der Ansprüche 1 bis 6,
dadurch-gekennzeichnet, dass die Formleisten (6, 6a bis 6d), in Seitenansicht gesehen, einen Winkel mit der Längsachse (12) des Gewindeformers einschließen.

8. Gewindeformer nach einem der Ansprüche 1 bis 7,
**dadurch gekennzeichnet, dass** die Formleisten (6, 6a bis 6d) spiralig verlaufen.

9. Gewindeformer nach einem der Ansprüche 1 bis 8,
**dadurch gekennzeichnet, dass** die Formleisten (6, 6a bis 6d) über den Umfang des Grundkörpers (1') gleichmäßig verteilt angeordnet sind.

10. Gewindeformer nach einem der Ansprüche 1 bis 8,
**dadurch gekennzeichnet, dass** die Formleisten 6, 6a bis 6d) über den Umfang des Grundkörpers (1') ungleichmäßig verteilt angeordnet sind.

11. Gewindeformer nach einem der Ansprüche 1 bis 10,
**dadurch gekennzeichnet, dass** die Formleisten (6, 6a bis 6d) symmetrisch zu einer Axialebene (16) des Grundkörpers (1') angeordnet sind.

12. Gewindeformer nach einem der Ansprüche 1 bis 10,
**dadurch gekennzeichnet, dass** die Formleisten (6, 6a bis 6d) so angeordnet sind, dass ihre Längsmittelebene (24) einen spitzen Winkel mit der zugehörigen Axialebene (16) des Grundkörpers (1') einschließt.

13. Gewindeformer nach einem der Ansprüche 1 bis 12,
**dadurch gekennzeichnet, dass** der Gewindeformer mit einer inneren Kühlmittelzuführung (22, 23) versehen ist.

## Claims

1. Thread former with a main body (1') with moldings (6, 6a to 6d), that are distributed about its circumference and are provided with thread-forming teeth (13, 14) and which are fastened to the main body (1') by soldering, gluing or welding,
**characterised in that** the moldings (6, 6a to 6d) project radially so far past the main body (1') that a profiling tool during manufacture or resharpening of the thread-forming teeth (13, 14) engages only the moldings (6, 6a to 6d), but not the main body (1'), and that during the thread-forming exclusively the moldings (6, 6a to 6d) get contact with the respective workpiece, but not with the main body (1').

2. Thread former according to claim 1,
**characterised in that** the moldings (6, 6a to 6d) are fastened in receiving grooves (7) of the main body (1').

3. Thread former according to claim 1 or 2,
**characterised in that** the moldings (6, 6a to 6d) are embodied symmetrical relative to their longitudinal centre plane (24).

4. Thread former according to claim 1 or 2
**characterised in that** the moldings (6, 6a to 6d) are embodied asymmetrical relative to their longitudinal centre plane (24).

5. Thread former according to one of the claims 1 to 4,
**characterised in that** the moldings (6, 6a to 6d) are arranged axis-parallel.

6. Thread former according to one of the claims 1 to 4,
**characterised in that** moldings (6, 6a to 6d) are positioned at an angle relative to an axial plane (16).

7. Thread former according to one of the claims 1 to 6,
**characterised in that** the moldings (6, 6a to 6d), viewed in a side view, comprise an angle relative to the longitudinal axis (12) of the thread former.

8. Thread former according to one of the claims 1 to 7,
**characterised in that** the moldings (6, 6a to 6d) extend spirally.

9. Thread former according to one of the claims 1 to 8,
**characterised in that** the moldings (6, 6a to 6d) are arranged uniformly distributed about the circumference of the main body (1').

10. Thread former according to one of the claims 1 to 8,
**characterised in that** the moldings (6, 6a to 6d) are arranged non-uniformly distributed about the circumference of the main body (1').

11. Thread former according to one of the claims 1 to 10,
**characterised in that** the moldings (6, 6a to 6d) are symmetrically arranged relative to an axial plane (16) of the main body (1').

12. Thread former according to one of the claims 1 to 10,
**characterised in that** the moldings (6, 6a to 6d) are arranged such that their longitudinal centre plane (24) is positioned at an acute angle relative to the correlated axial plane (16) of the main body (1').

13. Thread former according to one of the claims 1 to 12,
**characterised in that** the thread former is provided with an inner cooling medium supply (22, 23).

## Revendications

1. Outil à former les filets avec un corps de base (1'), dans lequel sont prévues des languettes de formage (6, 6a à 6d), distribuées sur le circonférence lesquelles comprennent des dents pour formage des filets (13, 14) et lesquelles sont fixées par brasage, collage ou soudage au corps de base (1'),
**caractérisé en ce que** les languettes de formage (6, 6a à 6d) se projettent radialement aussi loin sur le corps de base (1') qu'un outil de profilage pendant la fabrication ou bien pendant le réaffûtage des dents pour formage des filets (13, 14) s'engrène seulement avec les languettes de formage (6, 6a à 6d), mais pas avec le corps de base (1') et que pendant le formage des filets les languettes de formage (6, 6a à 6d) entrent exclusivement en contact avec la pièce à usiner respective, mais pas avec le corps de base (1').

2. Outil à former les filets selon revendication 1,
**caractérisé en ce que** les languettes de formage (6, 6a à 6d) sont fixées dans des rainures de réception (7) du corps de base (1').

3. Outil à former des filets selon revendication 1 ou 2,
**caractérisé en ce que** les languettes de formage (6, 6a à 6d) sont formées symétriquement par rapport à leur plan médian longitudinal (24).

4. Outil à former des filets selon revendication 1 ou 2,
**caractérisé en ce que** les languettes de formage (6, 6a à 6d) sont formées asymétriquement par rapport à leur plan médian longitudinal (24).

5. Outil à former des filets selon une quelconque des revendications 1 à 4,
**caractérisé en ce que** les languettes de formage (6, 6a à 6d) sont placées parallèlement à l'axe.

6. Outil à former des filets selon une quelconque des revendications 1 à 4,
**caractérisé en ce que** les languettes de formage (6, 6a à 6d) sont positionnées sous un angle par rapport à un plan axial (16).

7. Outil à former des filets selon une quelconque des revendications 1 à 6,
**caractérisé en ce que** les languettes de formage (6, 6a à 6d), vues en vue de côté forment un angle avec l'axe longitudinal (12) de l'outil à former des filets.

8. Outil à former des filets selon une quelconque des revendications 1 à 7,
**caractérisé en ce que** les languettes de formage (6, 6a à 6d) se déroulent en forme de spirale.

9. Outil à former des filets selon une quelconque des revendications 1 à 8,
**caractérisé en ce que** les languettes de formage (6, 6a à 6d) sont placées réparties régulièrement sur la circonférence du corps de base (1').

10. Outil à former des filets selon une quelconque des revendications 1 à 8,
**caractérisé en ce que** les languettes de formage (6, 6a à 6d) sont placées réparties irrégulièrement sur la circonférence du corps de base (1').

11. Outil de formage de filets selon une quelconque des revendications 1 à 10,
**caractérisé en ce que** les languettes de formage (6, 6a à 6d) sont placées symétriquement par rapport à un plan axial (16) du corps de base (1').

12. Outil de formage de filets selon une quelconque des revendications 1 à 10,
**caractérisé en ce que** les languettes de formage (6, 6a à 6d) sont placées de façon à ce que leur plan médian longitudinal (24) forme un angle aigu avec le plan axial (16) correspondant du corps de base (1').

13. Outil de formage de filets selon une quelconque des revendications 1 à 12,
**caractérisé en ce que** l'outil de formage de filets est muni d'une alimentation en réfrigérant interne (22, 23).
